Europäisches Patentamt

European Patent Office

Office européen des brevets

(19)

(11) Veröffentlichungsnummer: **0 186 768 B1**

## (12) EUROPÄISCHE PATENTSCHRIFT

(45) Veröffentlichungstag der Patentschrift: 27.02.91

(21) Anmeldenummer: 85114645.6

(22) Anmeldetag: 18.11.85

(51) Int. Cl.⁵: **G11B 33/10, G11B 23/50, G11B 20/18, G11B 5/012, G01N 21/88, //G02B27/02, G02B23/24**

(54) Einrichtung zum Inspizieren der Oberfläche von Magnetspeicherplatten.

(30) Priorität: 21.12.84 DE 3446991

(43) Veröffentlichungstag der Anmeldung:
09.07.86 Patentblatt 86/28

(45) Bekanntmachung des Hinweises auf die Patenterteilung:
27.02.91 Patentblatt 91/09

(84) Benannte Vertragsstaaten:
DE FR GB IT NL SE

(56) Entgegenhaltungen:
EP-A- 0 116 961

PATENT ABSTRACTS OF JAPAN, Band 8, Nr. 282 (P-323)[1719], 22. Dezember 1984; & JP-A-59 148 807

PATENT ABSTRACTS OF JAPAN, Band 8, Nr. 42 (P-256)[1479], 23. Februar 1984; & JP-A-58 194 179

(73) Patentinhaber: **Siemens Nixdorf Informations-systeme Aktiengesellschaft
Fürstenallee 7
D-4790 Paderborn(DE)**

(72) Erfinder: **Bogdanski, Michael
Schwarzrietweg 22
D-4796 Salzkotten(DE)**

(74) Vertreter: **Schaumburg, Thoenes & Englaender
Mauerkircherstrasse 31 Postfach 86 07 48
D-8000 München 86(DE)**

PATENT ABSTRACTS OF JAPAN, Band 8, Nr.
208 (P-302)[1645], 21. September 1984; & JP-
A-59 92 452

IBM TECHNICAL DISCLOSURE BULLETIN,
Band 26, Nr. 4, September 1983, Seiten
1880-1881, New York, US; J.C. ASKEW et al.:
"Automatic diskette drive test station"

IBM TECHNICAL DISCLOSURE BULLETIN,
Band 26, Nr. 3B, August 1983, Seiten
1668-1672, New York, US; R.J. BORNHORST et
al.: "Microscope attachment for accurately
locating angle and track location on a magnetic disk for defect data for visual inspection of microscopic coating defects"

IBM TECHNICAL DISCLOSURE BULLETIN,
Band 25, Nr. 3B, August 1982, Seiten
1514-1515, New York, US; G. TRIPPEL et al.:
"Disk with discrete magnetic tracks"

## Beschreibung

Die Erfindung betrifft eine Anordnung bestehend aus einem Magnetplattenspeicher und einer Betrachtungseinrichtung nach dem Oberbegriff des Patentanspruchs 1.

In einem Magnetplattenspeicher sind meist mehrere Magnetspeicherplatten als Plattenstapel angeordnet und dienen zur Speicherung von Informationen auf Speicherspuren, die zueinander und zur Rotationsachse des Plattenstapels konzentrisch verlaufen und von jeweils einem elektromagnetischen Wandlerkopf zur Durchführung eines Schreib- oder Lesevorganges abgetastet werden. Der Wandlerkopf ist an dem Kopfarm gehalten, und dieser kann durch den mit einem Antrieb gekoppelten Kopfarmträger auf die einzelnen Magnetspeicherspuren eingestellt werden, indem der Kopfarm entweder parallel zur Magnetspeicherplatte verschwenkt oder aber in radialer Richtung verfahren wird. Dabei schwebt der Wandlerkopf in geringem Abstand über bzw. unter der jeweiligen Magnetspeicherplatte. Für jede Magnetspeicherplatte sind zwei Wandlerköpfe vorgesehen, die an ihrem Kopfarm über bzw. unter die Magnetspeicherplatte bewegt werden, so daß sie doppelseitig nutzbar ist. Sind mehrere Magnetspeicherplatten vorgesehen, so werden entsprechend viele Wandlerköpfe stapelartig übereinander an dem ihnen gemeinsamen Kopfarmträger gehalten.

Durch Umwelteinflüsse verschiedenster Art, insbesondere durch Verschmutzungen oder unbeabsichtigte Kontakte der Wandlerköpfe an den Magnetspeicherplatten, können deren Oberflächen bei längerer Einsatzzeit beeinträchtigt werden. Hierzu ist es erforderlich, die Magnetspeicherplatten zu inspizieren, damit sie bei zu großer Verschlechterung ihres Magnetschichtmediums ausgewechselt werden können. Hierzu mußten die Magnetspeicherplatten bisher aus dem Magnetplattenspeicher entnommen und einer optischen Überprüfung unterzogen werden, was gegebenenfalls mit weiteren Beeinträchtigungen oder Schäden verbunden war. Besonders konnten dabei Zentrierfehler auftreten, zu deren Vermeiden ein relativ hoher Arbeitsaufwand beim Wiedereinbau der Magnetspeicherplatte erforderlich war.

Aus der EP-A-O 116 691 ist eine Betrachtungseinrichtung bekannt, von der die Erfindung ausgeht und die zum Inspizieren von Schreib-Leseköpfen dient, welche bei Magnetspeicherplatten in Magnetplattenspeichern zur Anwendung kommen. Die Betrachtungseinrichtung ist zum seitlichen Einschieben zwischen die Halterung der Schreib-Leseköpfe vorgesehen und hat einen abgewinkelten Rahmen mit Seitenwänden, deren Höhe etwa dem Abstand der Schreib-Lesekopfhalterungen entspricht. Dadurch können die Seitenwände zwischen die SchreibLesekopfhalterungen eingeführt werden und es kann ein Keramikplättchen eines Schreib-Lesekopfes in seinem gegenüber der Magnetspeicherplatte zurückgezogenen Zustand betrachtet werden. Bei Magnetplattenspeichern tritt aber auch das Problem auf, daß die Magnetspeicherplatten nach längerer Einsatzzeit auf ihrer Haltbarkeit hin inspiziert werden müssen.

Es ist Aufgabe der Erfindung, eine Möglichkeit zum Inspizieren der Oberfläche von Magnetspeicherflächen anzugeben, die einen umständlichen Ausbau und Wiedereinbau der Magnetspeicherplatten vermeidet, so daß dieser Arbeitsaufwand im Verlaufe der Nutzungsdauer einer Magnetspeicherplatte eingespart werden kann.

Eine Anordnung eingangs genannter Art zeichnet sich zur Lösung dieser Aufgabe erfindungsgemäß dadurch aus, daß Mittel vorgesehen sind, die ein Montieren der Betrachtungseinrichtung anstelle eines oder mehrerer Kopfarme an dem Kopfarmträger des Schreib-Lesekopfes gestatten.

Vorteilhafte Weiterbildungen des Erfindungsgegenstandes sind den Unteransprüchen 2 bis 5 zu entnehmen.

Die Erfindung geht von der Idee aus, daß bei der Inspektion von Magnetspeicherplatten eine Betriebspause des Magnetplattenspeichers vorliegt, in der die elektromagnetischen Wandlerköpfe nicht gebraucht werden, so daß an ihrer Stelle eine Betrachtungseinrichtung zur optischen Überprüfung der Plattenoberfläche eingesetzt werden kann. Hierzu werden die Kopfarme von dem Kopfarmträger abgenommen und an ihrer Stelle die Betrachtungsanordnung an den Kopfarmträger angesetzt. Die Betrachtungsanordnung kann dann mit ihrem Kragarm genau wie ein Kopfarm zwischen die Magnetspeicherplatten geschwenkt bzw. verfahren werden, so daß hierzu der normale Antrieb des Kopfarmträgers genutzt werden kann. Da der Lichteintritt der Betrachtungsanordnung an dem Kragarm vorgesehen ist, wird mit ihm unmittelbar die Magnetspeicherplattenoberfläche betrachtet, und durch deren Drehung kann sie insgesamt inspiziert werden. Die Betrachtungsanordnung kann dabei außerhalb des Magnetspeicherplattenbereichs direkt am Kopfarmträger montiert sein, und lediglich ihr Lichteintrittsteil ist an dem Kragarm angeordnet, so daß dieser bequem in den relativ kleinen Zwischenraum zwischen den Magnetspeicherplatten eingeführt werden kann. Mit der Lichtleitung von dem Kragarm zu dem weiteren, außerhalb der Magnetspeicherplatten angeordneten Teil der Betrachtungsanordnung kann vorteilhaft eine Lichtumlenkung so verbunden werden, daß eine einfache Betrachtung im Okular der Betrachtungsanordnung an einer Stelle des Magnetplattenspeichers möglich ist, die von außen her leicht zugänglich ist.

Zur Lichtaufnahme und Lichtleitung längs des Kragarmes sind verschiedenste optische Elemente einsetzbar, jedoch hat sich als besonders einfach und vorteilhaft eine Konstruktion erwiesen, bei der als Lichteintrittsteil am freien Ende des Kragarmes ein Beobachtungsspiegel und gegebenenfalls eine Umlenkspiegelanordnung zum Umlenken des beobachteten Bildes in ein an der Wurzel des Kragarmes angeordnetes Betrachtungsgerät vorgesehen ist. Dabei ist eine Umlenkspiegelanordnung dann erforderlich, wenn der Beobachtungsspiegel nicht direkt in Längsrichtung des Kragarmes zu dessen Wurzel hin reflektiert. Vorteilhaft ist der Beobachtungsspiegel ein rechtwinkliger Prismenspiegel. Ein solcher Spiegel ist ein einheitlicher Glaskörper, dessen im rechten Winkel zueinander stehende Außenflächen verspiegelt sind. Wenn dieser Prismenspiegel mit parallel zu den Magnetspeicherplatten liegender Scheitelkante angeordnet ist, so können gleichzeitig Teile zweier Magnetspeicherplatten betrachtet werden, zwischen denen der Prismenspiegel angeordnet ist.

Es ist möglich, den Beobachtungsspiegel mit seiner Längserstreckung in Längsrichtung des Kragarmes oder quer dazu anzuordnen. Wenn er in Längsrichtung des Kragarmes ausgerichtet ist, so liegt er etwa in radialer Richtung zur Rotationsachse der Magnetspeicherplatten, und es wird ein seiner Längserstreckung entsprechend breiter Kreisring der jeweiligen Magnetspeicherplatte während einer Umdrehung inspiziert. Dabei ist dann zweckmäßig ein konvex gebogener, das aufgenommene Bild zum Betrachtungsgerät reflektierender Umlenkspiegel vorgesehen, der dann als Verkleinerungsspiegel wirkt und die Ausmaße des reflektierten Bildes so verringert, daß es der Objektivöffnung des Betrachtungsgeräts angepaßt ist.

Wenn der Beobachtungsspiegel mit seiner Längserstreckung quer zum Kragarm angeordnet ist, so kann er direkt zum Betrachtungsgerät reflektieren, jedoch ist dann ein relativ schmaler Kreisring der Magnetspeicherplattenoberfläche inspizierbar, so daß der Kragarm zur Inspektion der gesamten Magnetspeicherplattenoberfläche öfter verlagert werden muß.

Wenn im Bereich der Wurzel des Kragarmes ein Umlenkspiegel angeordnet ist, welcher das vom Beobachtungsspiegel kommende Bild in das Betrachtungsgerät umlenkt, so kann dieses mit seiner optischen Achse vertikal angeordnet sein, so daß dann eine besonders bequeme Inspektion der Magnet speicherplattenoberflächen von oben her möglich ist.

Vorteilhaft ist die Betrachtungsanordnung in Richtung der Speicherplattenachse verstellbar am Kopfarmträger montierbar. Es ist dann nur ein einziger Kragarm vorzusehen, der nacheinander in die Zwischenräume zwischen jeweils zwei Magnetspeicherplatten eines Plattenstapels bewegt werden kann.

Ausführungsbeispiele der Erfindung werden im folgenden an Hand der Figuren beschrieben. Es zeigen:

Fig. 1 die perspektivische Darstellung eines in einem Magnetplattenspeicher radial zu den Magnetspeicherplatten verfahrbaren Kopfarmträgers mit an ihm angebrachter Betrachtungsanordnung,

Fig. 2 eine Draufsicht auf die wichtigsten Teile der Betrachtungsanordnung und ihrer Halterung und

Fig. 3 die Seitenansicht einer Anordnung ähnlich Fig. 1 und 2, jedoch mit einer anderen Orientierung des Beobachtungsspiegels.

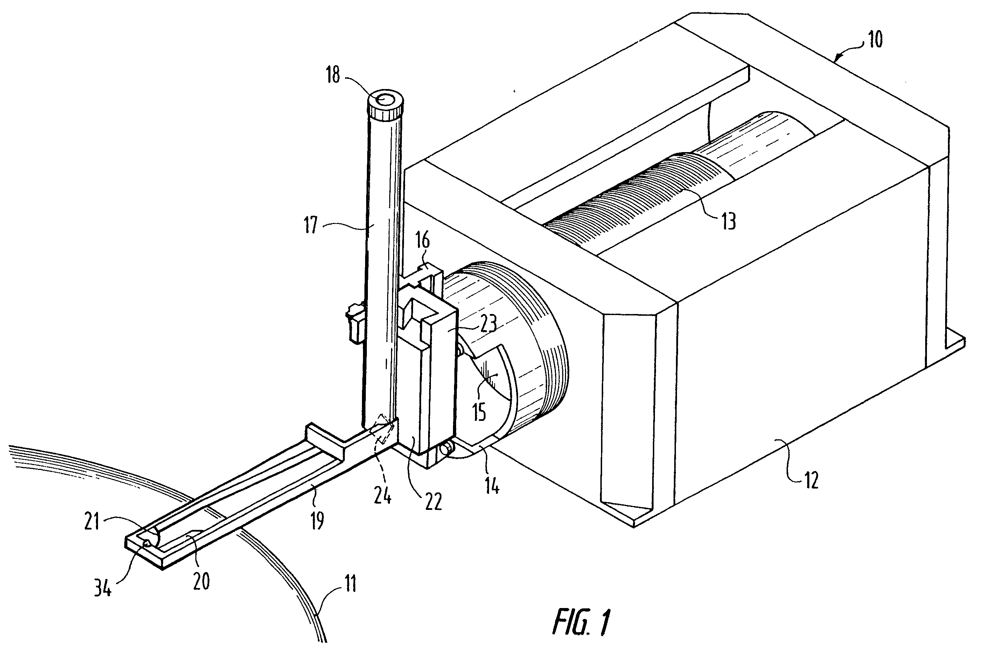

In Fig. 1 ist perspektivisch ein elektrodynamischer Linearantrieb 10 dargestellt, der in einem Magnetplattenspeicher einer nur teilweise angedeuteten Magnetspeicherplatte 11 zugeordnet ist und in einem kastenartigen Gehäuse 12 einen mit einer elektrischen Spule l3 versehenen zylindrischen Antriebskörper 14 enthält. Dieser ist konzentrisch auf einem Eisenkern 15 geführt und wird in an sich bekannter Weise durch Erzeugung eines elektrodynamischen Effekts aus dem Gehäuse l0 heraus oder in dieses hinein bewegt, um normalerweise einen Kopfarm mit einem an ihm gehaltenen elektromagnetischen Wandler in eine vorbestimmte Position relativ zu der Magnetspeicherplatte 11 zu bewegen. An dem äußeren Ende des Antriebszylinders 14 ist hierzu ein Kopfarmträger 16 befestigt, der in nicht dargestellter Weise so ausgebildet ist, daß er einen oder mehrere Kopfarme tragen kann, die in Längsrichtung des Antriebszylinders 14 ausgerichtet sind.

Eine Antriebsvorrichtung dieser Art ist an sich bekannt und arbeitet nach dem bereits genannten Prinzip der radialen Kopfbewegung.

An Stelle eines oder mehrerer Kopfarme ist bei dem in Fig. 1 gezeigten Gerät an dem Kopfarmträger 16 eine Betrachtungsanordnung montiert. Diese umfaßt als wesentliche Teile ein Betrachtungsgerät 17, das in Fig. 1 der Einfachheit halber als ein rohrförmiger Körper dargestellt ist und an seinem oberen Ende ein Okular 18 oder einen Anschluß zum Aufsetzen eines nicht weiter dargestellten Okulars hat. Im Bereich seines unteren Endes befindet sich ein nicht dargestelltes Objektiv, dessen Ort innerhalb des Betrachtungsgeräts 17 hier nicht von besonderer Wichtigkeit ist.

Das Betrachtungsgerät 17 bildet zusammen mit einem Kragarm 19 die Betrachtungsanordnung. Der Kragarm 19 ist im wesentlichen rahmenartig ausgebildet und trägt an seinem freien Ende einen Beobachtungsspiegel 20 und einen Umlenkspiegel 21. Außerdem ist eine Lichtquelle 34 zu erkennen, die am äußersten Ende des Kragarms 19 angebracht ist. Der Kragarm 19 und das Betrachtungsgerät 17 sind in nicht näher dargestellter Weise an einem Führungskörper 22 befestigt, der in vertikaler Richtung verschiebbar und hierzu mit einem schwalbenschwanzförmigen Führungsteil versehen ist, der in einem entsprechend schwalbenschwanzförmigen Führungskanal eines Haltekörpers 23 sitzt, der an dem Kopfarmträger 16 montiert ist.

Unter dem Betrachtungsgerät 17 ist am Kragarm 19 ein Umlenkspiegel 24 angeordnet, der ein mit dem Beobachtungsspiegel 20 aufgenommenes und am Umlenkspiegel 21 reflektiertes Bild der Oberfläche der Magnetspeicherplatte 11 auf die in Fig. 1 nicht zu erkennende Objektivöffnung des Betrachtungsgeräts 17 reflektiert.

Wenn der Antriebszylinder 14 aus dem Gehäuse 10 heraus bewegt wird, so wird der Kragarm 19 mit dem daran gehaltenen Beobachtungsspiegel 20 radial zur Magnetspeicherplatte 11 bewegt, so daß nacheinander in unterschiedlichen radialen Stellungen bei Drehung der Magnetspeicherplatte 11 ein kreisringförmiger Abschnitt ihrer Oberfläche mit dem Betrachtungsgerät 17 inspiziert werden kann, indem das entsprechende Bild durch das Okular 18 hindurch von oben her betrachtet wird.

Der Führungskörper 22 und der Haltekörper 23 ermöglichen eine vertikale Verstellung der Betrachtungsanordnung, so daß der Kragarm 19 in einem Magnetplattenspeicher in unterschiedliche Höhenlagen gestellt werden kann und somit bei mehreren Magnetspeicherplatten eine Inspektion aller Plattenoberflächen möglich ist.

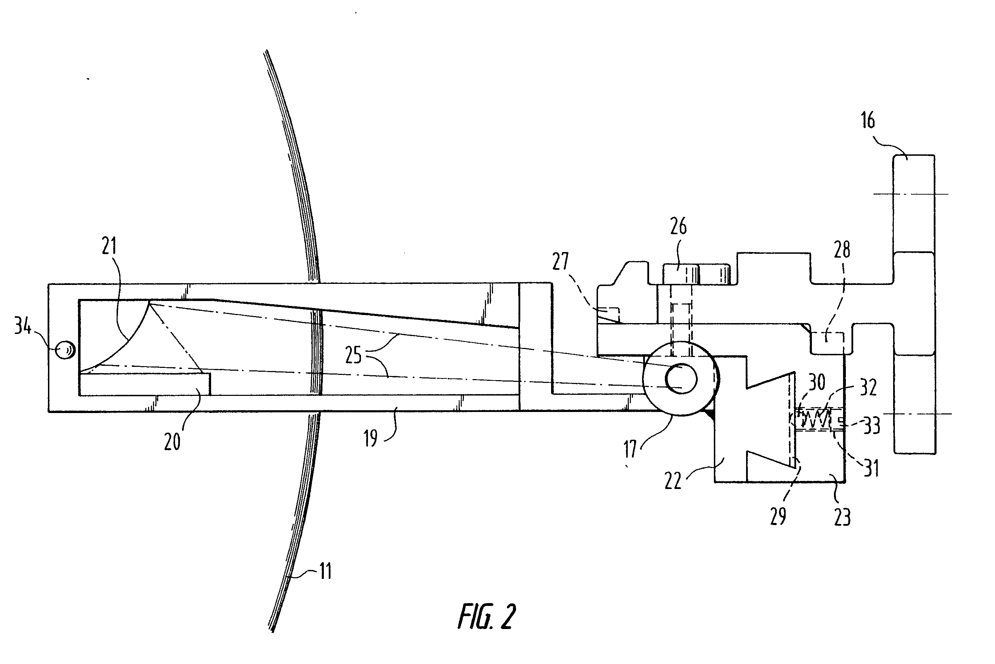

Fig. 2 zeigt die in Fig. 1 dargestellte Betrachtungsanordnung ohne den elektrodynamischen Antrieb in einer Draufsicht. Hier ist zusätzlich der optische Strahlengang von dem Beobachtungsspiegel 20 über den konvex gekrümmten Umlenkspiegel 21 zum Betrachtungsgerät 17 durch gestrichelte Linien 25 angedeutet. Es ist zu erkennen, daß die Licht-strahlen 25 zum Betrachtungsgerät 17 hin konvergieren und das mit dem Beobachtungsspiegel 20 aufgenommene Bild verkleinern bzw. der Objektivöffnung des Betrachtungsgeräts 17 anpassen. Da der Beobachtungsspiegel 20 mit seiner Längserstreckung etwa radial zur Magnetspeicherplatte 11 angeordnet ist, kann mit ihm bei Drehung der Magnetspeicherplatte 11 ein kreisringförmiger Bereich inspiziert werden. Dabei wird die Magnetspeicherplatte 11 von einer Glühlampe entsprechend der Glühlampe 34 beleuchtet, die an der Unterseite des Kragarms 19 vorgesehen ist.

Fig. 2 zeigt außerdem deutlicher die Schwalbenschwanzführung der beiden Teile 22 und 23 sowie die Anpassung des Haltekörpers 23 an die Formgebung des Kopfarmträgers 16. Der Haltekörper 23 ist an dem Kopfarmträger 16 mit Schrauben montiert, von denen in Fig. 2 eine Schraube 26 zu erkennen ist. Im übrigen ist zur weiteren Sicherung der Montage des Haltekörpers 23 am Kopfarmträger 16 eine Ausnutzung von Vorsprüngen bzw. Aussparungen vorgesehen, deren Form der Haltekörper 23 gleichfalls angepaßt ist. Solche Anordnungen sind bei 27 und 28 zu erkennen.

Der Führungskörper 22 ist in dem Haltekörper 23 bei unterschiedlichen vertikalen Einstellungen verrastbar. Hierzu sind am Führungskörper 22 Rastkerben 29 vorgesehen, in die eine Rastkugel 30 einrastet, welche in einer Bohrung 31 des Haltekörpers 23 sitzt und in an sich bekannter Weise federnd in die jeweilige Rastkerbe 29 gedrückt wird. Hierzu dient eine Feder 32, die durch eine Schraube 33 in der Bohrung 31 gehalten wird.

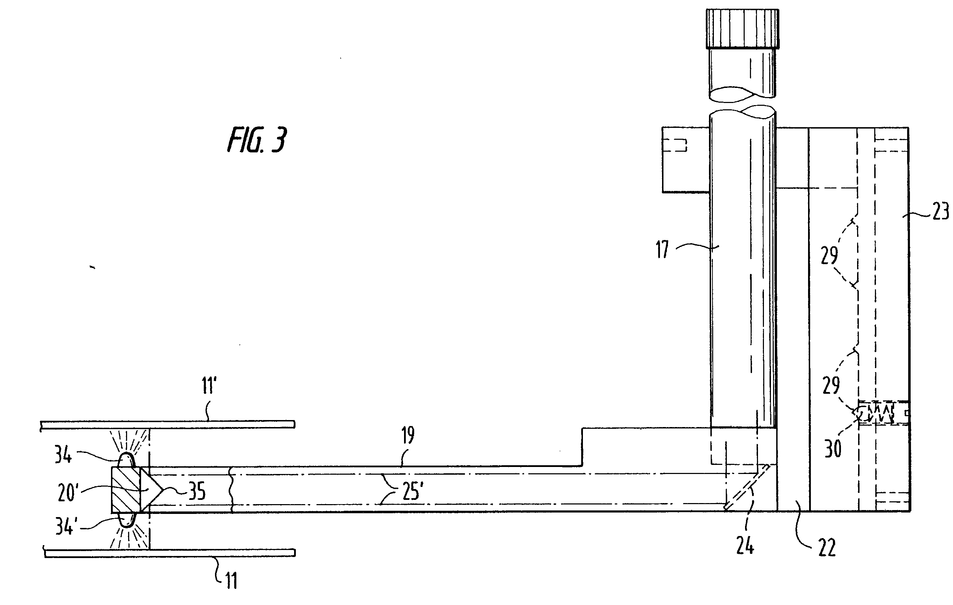

Fig. 3 zeigt eine Seitenansicht der Anordnung nach Fig.2, jedoch für eine andere Orientierung des Beobachtungsspiegels, wodurch dessen Funktion besser erkennbar wird. Außerdem sind eine untere Magnetspeicherplatte 11 und eine obere Magnetspeicherplatte 11' dargestellt, zwischen denen der Kragarm 19 angeordnet ist. Der Beobachtungsspiegel 20' ist hier mit seiner Längserstreckung quer zur Längserstreckung des Kragarms 19 angeordnet und als Prismenspiegel ausgeführt. Er reflektiert somit ein Bild der oberen Magnetspeicherplatte 11' und der unteren Magnetspeicherplatte 11 direkt auf den Umlenkspiegel 24 an der Wurzel des Kragarms 19, der es wiederum in das Betrachtungsgerät 17 reflektiert. Entsprechende Strahlengänge 25' sind in Fig. 3 angedeutet.

Daraus wird ersichtlich, daß mit dem Betrachtungsgerät 17 gleichzeitig zwei streifenförmige Bilder betrachtet werden können, die durch eine Linie getrennt sind, welche der Scheitelkante 35 des Prismenspiegels 20' entspricht.

Fig. 3 zeigt außerdem die bei der Vertikalverstellung des Führungskörpers 22 an dem Haltekörper 23 mögliche Verrastung in unterschiedlichen Höhenlagen, wozu die Rastkerben 29 und die Rastkugel 30 vorgesehen sind.

Bei den beiden möglichen Anordnungen des Beobachtungsspiegels 20 bzw. 20' nach Fig. 2 und 3 wird jeweils ein streifenförmiger Bereich der Oberfläche einer oder zweier Magnetspeicherplatten 11 bzw. 11' inspiziert, der durch die jeweilige Lichtquelle 34 bzw. 34' beleuchtet wird. Bei der Anordnung nach Fig. 2 ist dieser Bereich bei Drehung der Magnetspeicherplatte 11 ein Kreisring mit einer Breite, die der Länge des Beobachtungsspiegels 20 entspricht, während es sich bei der Anordnung nach Fig. 3 um einen Kreisring handelt, dessen Breite der Breite des Beobachtungsspiegels 20' entspricht.

Die vorstehend erläuterten Ausführungsbeispiele der Erfindung lassen sich ohne weiteres auch in einem Magnetplattenspeicher einsetzen, bei dem die Kopfarme nicht mit einem Linearantrieb zwischen den Magnetspeicherplatten verfahren, sondern mit einem Schwenkantrieb zwischen die Magnetspeicherplatten geschwenkt werden. Die Art der Positionierbewegung des Beobachtungsspiegels ist für die Funktion der Betrachtungsanordnung nicht von Bedeutung.

## Ansprüche

1. Anordnung bestehend aus einem Magnetplattenspeicher, der einen einer jeweiligen Magnetspeicherplatte (11) zugeordneten Schreib-Lesekopf enthält, welcher an einem parallel zur Magnetspeicherplattenebene bewegbaren und an einem Kopfarmträger (16) angeordneten Kopfarm gehalten ist, und aus einer Betrachtungseinrichung (17 18 19) für den Magnetplattenspeicher, mit einem im wesentlichen parallel zur Magnetspeicherplattenebene stehenden Kragarm (19) an dem ihr Lichteintrittsteil (20) angeordnet ist, dadurch gekennzeichnet, daß Mittel (22, 23) vorgesehen sind, die ein Montieren der Betrachtungseinrichtung (17, l8, 19) anstelle eines oder mehrerer Kopfarme an dem Kopfarmträger (l6) des Schreib-Lesekopfes gestatten.

2. Anordnung nach Anspruch 1, dadurch **gekennzeichnet,** daß die Betrachtungseinrichtung in Richtung der Speicherplattenachse verstellbar am Kopfarmträger (16) montierbar ist.

3. Anordnung nach Anspruch 2, dadurch **gekennzeichnet,** daß am Kopfarmträger (16) einerseits und an der Betrachtungseinrichtung (17, 18, 19) andererseits jeweils zusammenwirkende, eine Verschiebeführung in Richtung der Speicherplattenachse bildende Führungsprofile (22, 23) ausgebildet sind, und daß Mittel (29 bis 33) zum Arretieren der Betrachtungseinrichtung in verschiedenen Verschiebestellungen vorgesehen sind.

4. Anordnung nach Anspruch 3, dadurch **gekennzeichnet,** daß die Mittel zum Arretieren der Betrachtungseinrichtung (17, 18, 19) am Führungsprofil (22) der Betrachtungseinrichtung ausgebildete Rastkerben (29) und eine am Führungsprofil (23) des Kopfarmträgers (16) vorgesehene, in die Rastkerben (29) einrastbare Rastkugel (30) sind.

5. Anordnung nach einem der Ansprüche 1 bis 4, dadurch **gekennzeichnet,** daß ein als Lichteintrittsteil (20, 20') vorgesehener Beobachtungsspiegel (20) der Betrachtungseinrichtung im wesentlichen in Längsrichtung des Kragarmes (19) ausgerichtet ist und mit einem konvex gebogenen, das aufgenommene Bild zur Betrachtungseinrichtung (17, 18, 19) reflektierenden Umlenkspiegel (21) zusammenwirkt.

## Claims

1. Arrangement consisting of a magnetic disk memory containing a write-read head allocated to a respective magnetic disk (11), said write-read head being supported at a head arm being movable in parallel to the magnetic disk plane and arranged at a head arm carrier (l6), and a viewing device (17,18,19) for the magnetic disk memory, with a bracket (19) standing substantially parallel to the magnetic disk plane and on which its light entrance component (20) is arranged, **characterized** in that means (22,23) are provided for mounting the viewing device (17,18,19) on the head arm carrier (16) of the write-read head instead of one or several head arms.

2. Arrangement according to claim 1, **characterized** in that the viewing device can be mounted to be adjustable in the direction of the memory disk axis on the head arm carrier (16).

3. Arrangement according to claim 2, **characterized** in that, on the one hand, at the head arm carrier (16) and, on the other hand, at the viewing device (17,18,19), respectively interacting guiding sections (22,23) are provided which form a shifting guide in the direction of the memory disk axis, and that means (29 through 33) are provided for fixing the viewing device in various shifting positions.

4. Arrangement according to claim 3, **characterized** in that the means for fixing the viewing device (17,18,19) are catch notches (29) provided at the guiding section (22) of the viewing device and a catch ball (30) provided at the guiding section (23) of the head arm carrier (16) and catching in the catch notches (29).

5. Arrangement according to anyone of claims 1 to 4, **characterized** in that an observation mirror (20) of the viewing device is provided as a light entrance component (20,20') and aligned substantially in longitudinal direction of the bracket (19), said observation mirror interacting with a deflecting mirror (21) being convexly shaped and reflecting the recorded image to the viewing device (17,18,19).

**Revendications**

1. Dispositif constitué d'une mémoire à disque magnétique qui contient une tête d'enregistrement et de lecture, associée à un disque (11)) de mémoire magnétique, et qui est maintenue sur un bras de tête, se déplaçant parallèlement au plan du disque de mémoire magnétique et disposé sur un support de bras de tête (16), ainsi que d'un dispositif d'observation (17, l8, 19) pour la mémoire à disque magnétique, avec un bras en porte-à-faux (19), à peu près parallèle au plan du disque de mémoire magnétique et sur lequel est disposée sa partie d'entrée de lumière (20), caractérisé en ce qu'on prévoit des moyens (22, 23) qui autorisent un montage du dispositif d'observation (17, 18, 19) à la place d'un ou de plusieurs bras de tête, sur le support de bras de tête (16) de la tête d'enregistrement et de lecture.

2. Dispositif selon la revendication 1, caractérisé en ce que le dispositif d'observation peut être monté sur le support de bras de tête (16), de manière à se déplacer en direction de l'axe du disque de mémoire.

3. Dispositif selon la revendication 2, caractérisé en ce qu'on forme sur le support de bras de tête (16) d'une part et sur le dispositif d'observation (17, 18, 19) d'autre part, des profils de guidage (22, 23) coopérants, formant un organe de guidage de déplacement en direction de l'axe du disque de mémoire et en ce qu'on prévoit des moyens (29 à 33) pour bloquer le dispositif d'observation dans différentes positions de déplacement.

4. Dispositif selon la revendication 3, caractérisé en ce que les moyens de blocage du dispositif d'observation (17, 18, 19) sont des encoches d'arrêt (29), formées sur le profil de guidage (22) du dispositif d'observation, et une bille d'arrêt (30), prévue sur le profil de guidage (23) du support de bras de tête (16), pouvant se bloquer dans les encoches d'arrêt (29).

5. Dispositif selon l'une des revendications 1 à 4, caractérisé en ce qu'un miroir d'observation (20) du dispositif d'observation, prévu comme partie d'entrée de lumière (20, 20'), est orienté à peu près dans la direction longitudinale du bras en porte-à-faux (19) et coopère avec un miroir de déviation (21) convexe, réfléchissant l'image recueillie vers le dispositif d'observation (17, 18, 19).

FIG. 1

EP 0 186 768 B1

FIG. 2

FIG. 3

EP 0 186 768 B1